**Description**

DIE-FREE POLYMER FORMING PROCESS

This invention relates to die-free polymer forming processes; more particularly, this invention relates to polymer forming processes wherein the polymer withdrawing is effected without passage of the polymer material through an extrusion die; and to elongate polymer material so prepared.

It is known, for example from GB 2042414 and GB 2051667, and from EPA 55001 and EPA 77590, to prepare filled or unfilled high performance fibres by spinning solutions of polymer material through a conventional spinneret and then deforming them to give the highly oriented, high performance fibres. Such processes are found, in practice, to have difficulties associated with the extrusion process which, inter alia, limits production rates.

It is also known ("Principles of Polymer Systems", Rodriguez published by McGraw-Hill (1983)) that interfacial condensation can occur between contiguous stagnant layers of reactant monomer solutions to form the resulting polymer material, for example nylon, at the interface; and that the polymer material may be removed continuously. This is known as the "nylon rope trick"; but it is said to be not very convenient even for laboratory preparation and does not produce hightly orientable polymer materials.

It is further known (Nature 212 pp 754-756 (1966) and J. Non-Newtonian Fluid Mechanics 8 pp 119-138 (1981)) that viscoelastic fluids, for example aqueous solutions of polyethylene oxide or of acrylamide, can undergo an open channel siphon in which an unchannelled stream of the fluid, allowed to fall from the lip of a reservoir thereof, will continue in siphon flow for a time even though, by loss of the fluid, the reservoir surface descends below the lip.

This invention seeks to provide an improved process for the preparation of an elongate polymer material, especially (but not exclusively) as fibre.

According, therefore, to one aspect of this invention there is provided a process for the preparation of an elongate polymer material, which process comprises withdrawing at least one continuous stream of a solution and/or gel of the polymer material from a reservoir thereof without the polymer material passing, as a solution and/or gel, through an extrusion die; and collecting the elongate polymer material so prepared.

By "withdrawing" is meant herein removing with attenuation and includes spinning. When withdrawing of a continuous stream is established it is observed that the cross-section of the stream normal to the machine direction of the stream is, immediately on leaving the reservoir, larger than in the remainder of the stream. This region, by analogy with glass and blow moulding of polymer materials technology, we have termed the parison. If desired, a plurality of streams of a solution and/or gel of the polymer material may be withdrawn from a single reservoir provided that means are provided, for example a wire mesh, immediately above the reservoir surface, to prevent the parisons from coalescing.

By "an extrusion die" is meant herein a fixed bounding solid surface defining an inlet and at least one outlet of relatively reduced cross-sectional area through which, in service, polymer material is extruded.

The process of the present invention is applicable to any thermoplastic organic polymer material, preferably a crystallisable such polymer material, provided only that the polymer material comprises at least a fraction of sufficiently high molecular weight and that this latter material can form an attenuatable solution and/or gel. Examples include unsubstituted or mono- or poly- halo-, for example chloro- or fluoro-, substituted vinyl polymers such as polyolefins, preferably linear polyolefins, polyvinyl chloride and polyvinylidene difluoride; polyalkylene oxides such as polyethylene oxide; polyacetals such as polyoxymethylene and polyacetaldehyde; polyamides, preferably aliphatic polyamides; aramid polymers such as KEVLAR (registered Trade Mark); unsubstituted or hydroxy-substituted polyesters such as PHB and polyethylene terephthalate; and polyetherketones.

The polymer material is suitably an addition homo- or copolymer, desirably a polyolefin. Preferably, the polyolefin comprises polyethylene, especially linear polyethylene, polypropylene, a polyethylene-polypropylene copolymer or a blend comprising at least one polyolefin therefrom.

It is desirable that the polymer material has a weight average molecular weight ( $\bar{M}_w$) greater than about 500,000, desirably greater than about 600,000. Below this value there is not sufficient of the polymer material of sufficiently high molecular entanglement and/or relaxation time to enable highly oriented films, in which the polymer material is believed to exist as extended chain fibrils, to be formed by the process of the present invention with commercial viability, if at all. Preferably ( $\bar{M}_w$) is greater than about 750,000, desirably greater than about 850,000, especially greater than about 1,000,000. Polymer materials having a weight average molecular weight as aforementioned also have higher tensile strength than those of polymer materials having a lower weight average molecular weight.

The solvent must not be low boiling otherwise it may evaporate so rapidly from the polymer material during processing as to act, in effect, as a pneumatogen and thereby disrupt the structure of the elongate polymer material. A solvent which boils, at standard pressure, above 100°C is satisfactory. On the other hand, the boiling point of the solvent must not be so high that it is difficult to remove it from the polymer material.

Halogenated and non-halogenated hydrocarbons are generally satisfactory solvents although polyolefins, such as linear polyethylene, are completely soluble in most of these solvents only at temperatures of at least 100°C. Suitable such solvents are, therefore, aliphatic, cycloaliphatic or aromatic hydrocarbons, preferably with boiling points above 100°C, especially above 140°C. Examples include the octanes, nonanes, decanes,

Europäisches Patentamt

European Patent Office

Office européen des brevets

(19)

(11) Publication number:

**0 238 342**
**A2**

(12) # EUROPEAN PATENT APPLICATION

(21) Application number: **87302380.8**

(22) Date of filing: **19.03.87**

(51) Int. Cl.⁴: **D 01 D 5/00**
**B 29 C 67/00**

(30) Priority: **20.03.86 GB 8606914**

(43) Date of publication of application:
**23.09.87 Bulletin 87/39**

(84) Designated Contracting States: **DE FR GB IT NL**

(71) Applicant: **NATIONAL RESEARCH DEVELOPMENT CORPORATION**
**101 Newington Causeway**
**London SE1 6BU (GB)**

(72) Inventor: **Mackley, Malcolm Robert**
**32 Chesterton Hall Crescent**
**Cambridge CB4 1AP (GB)**

**Solbai, Samad Bin**
**1 Maitland House Barton Road**
**Cambridge CB3 9JX (GB)**

(74) Representative: **Crespi, Romeo Stefano**
**Patent Department National Research Development Corporation 101 Newington Causeway**
**London SE1 6BU (GB)**

(54) **Die-free polymer forming process.**

(57) A process for the preparation of an elongate polymer material, which process comprises withdrawing at least one continuous stream of a solution and/or gel of the polymer material from a reservoir thereof without the polymer material passing, as a solution and/or gel, through an extrusion die; and collecting the elongate polymer material so prepared.

GELSPUN COMPOSITE TAPES
Stiffness Versus Draw Ratio

Fig. 5

EP 0 238 342 A2

higher straight or branched chain hydrocarbons, petroleum fractions with a boiling range above 100°C, toluene, xylenes, polycyclic aromatic hydrocarbons such as naphthalene, and hydrogenated derivatives thereof such as tetralin and decalin.

In the case of polyamides polar solvents are preferred. In the vase of aramid polymers fuming sulphuric acid is the solvent of choice.

In accordance with a preferred feature of this invention, the solution and/or gel of the polymer material is withdrawn at a lower environmental temperature (for example, a lower surface temperature) than that of the bulk of the solution and/or gel in the reservoir. This temperature may but substantially lower (typically 10°C or more lower) than that of the bulk: thus, we have found that a solution and/or gel of polyethylene at 130°C may provide a surface temperature from 80° to 85°C. It is desirable that this temperature from 70° to 120°C, suitably 75° to 115°C, preferably from 80° to 110°C such as 90° to 100°C, but below the boiling point of the selected solvent.

The concentration of the polymer material in the solution and/or gel must be greater than the critical concentration (C*) for molecular entanglement to occur; typically, the concentration should be at least 0.1 wt% for example, from 1 to 10 wt% preferably from 2 to 5 wt%.

In accordance with another feature of this invention, the elongate polymer material may be prepared as a sheet or tape. One method (method (a)) by which this can be accomplished is to withdraw a plurality of continuous streams of a solution and/or gel of the polymeric material from at least one reservoir thereof; and to permit these streams to coalesce laterally downstream. A more desirable method (method (b)) of preparing the elongate polymer material as a sheet or tape, however, is to withdraw a continuous stream of polymeric material from a solution and/or gel thereof while simultaneously providing surface tensioning means for the lateral edges of the withdrawing sheet or tape. The surface tensioning means may comprise spaced parallel wires, suitably of metal, or parallel continuous contra-rotatably drivable belts, spanning (in both cases) the distance between the reservoir surface and the haul-off means.

A preferred method (method (c)) of preparing the elongate polymer material is to withdraw a continuous stream of polymeric material from a solution and/or gel thereof through the nip of contra-rotatable rollers positioned with their curved surfaces at the surface of the solution and/or gel thereof. Such a method can also assist in reducing the solvent content of the solution and/or gel.

The or each continuous stream of the solution and/or gel of the polymeric material is suitably withdrawn at a speed from 0.5 to 50 metres per minute, preferably from 10 to 30 metres per minute.

In accordance with a further aspect of this invention the or each withdrawn stream is (i) dried and (ii) deformed, for example by drawing, in the machine direction at a temperature from 75°C (for example 90°C) to 135°C to provide a fibre, sheet or tape. Drying step (i) may be effected prior to the deforming step (ii); however, in accordance with a preferred aspect of the invention, the deformation is effected with better drawability before the stream is completely dried although the solvent content of the stream may be reduced before deformation. This may be effected by heating; by cooling; or by application of mechanical pressure to the stream.

The draw ratio obtained in step (ii) is suitably greater than 10X and preferably greater than 30X. Fibres with a draw ratio greater than 60X have been prepared by the process of this invention The final dried, deformed elongate polymer material is found to have very high Young's modulus and tensile strength.

The invention will be further illustrated with reference to the accompanying drawings, in which:

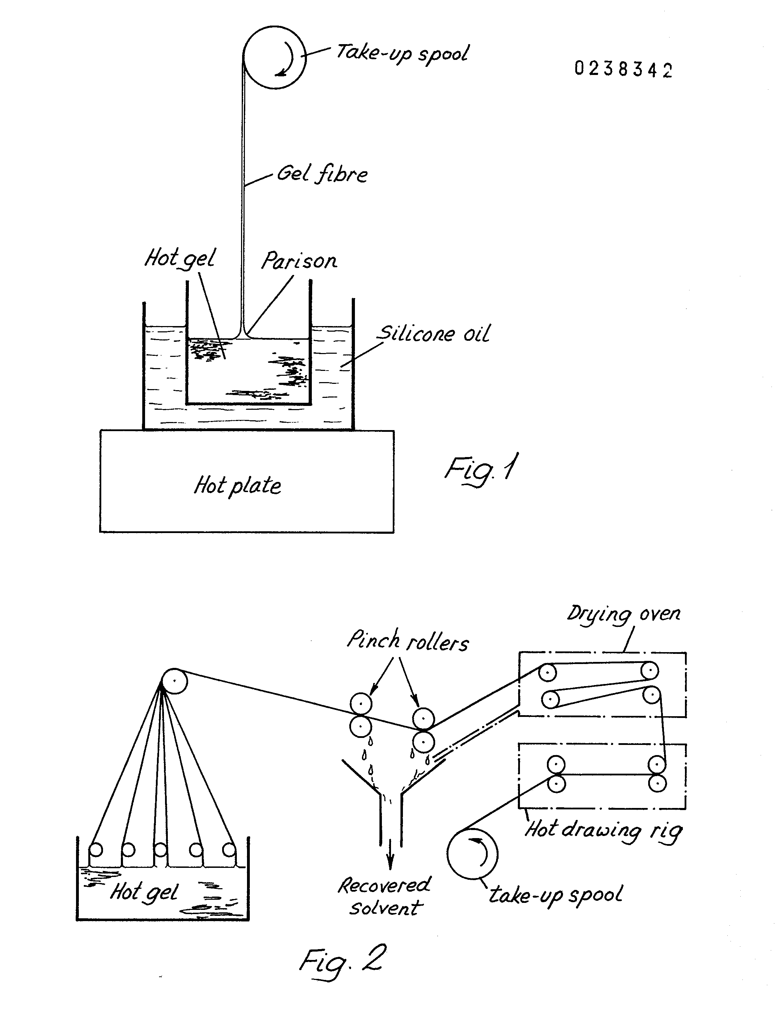

Figure 1 represents a single stream arrangement for performing the process of this invention;

Figure 2 represents an arrangement for withdrawing a plurality of streams of a solution and/or gel of the polymer material by the process of this invention;

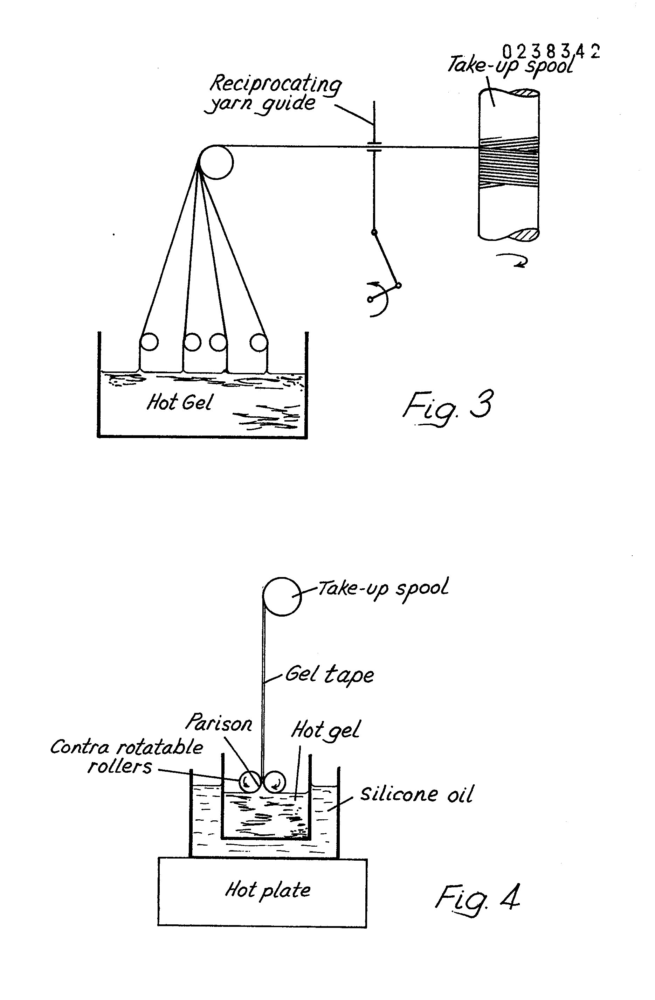

Figure 3 represents an arrangement for preparing tape by the process of this invention;

Figure 4 represents surface tensioning and coating means for preparing tape by the process of this invention; and

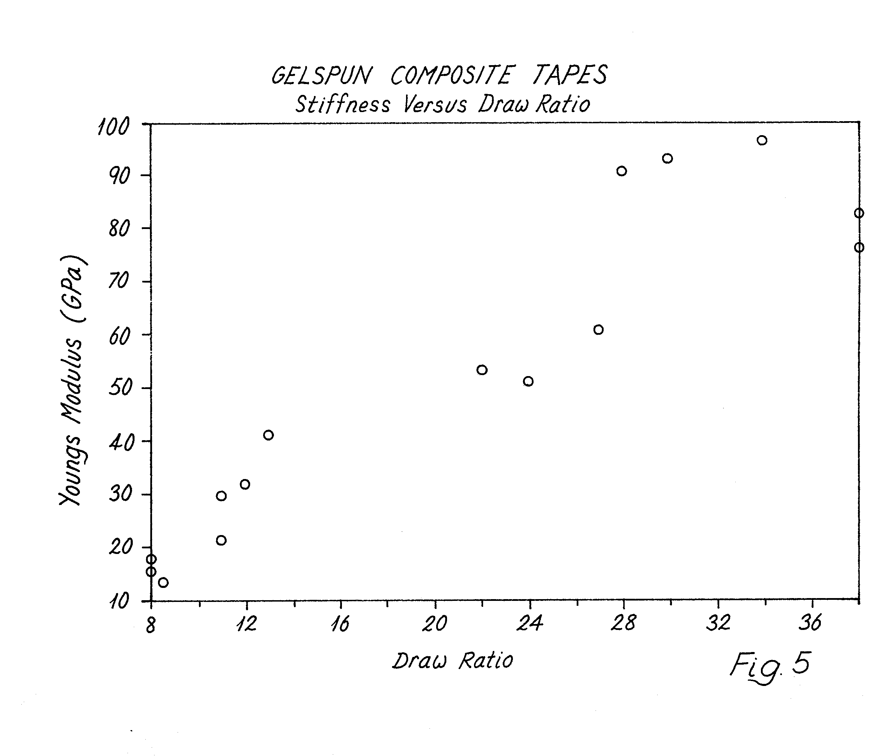

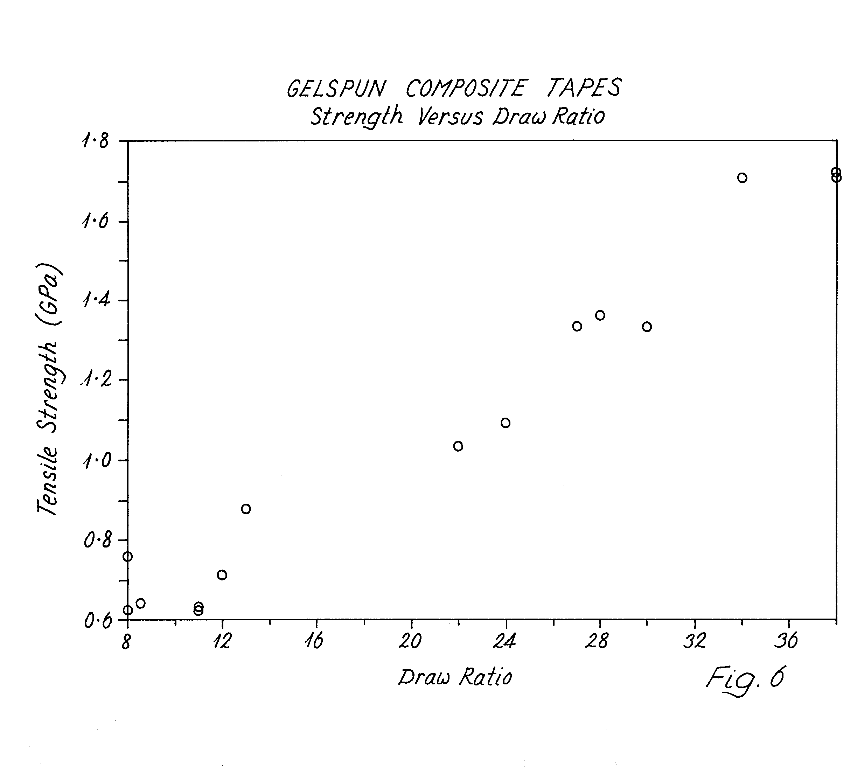

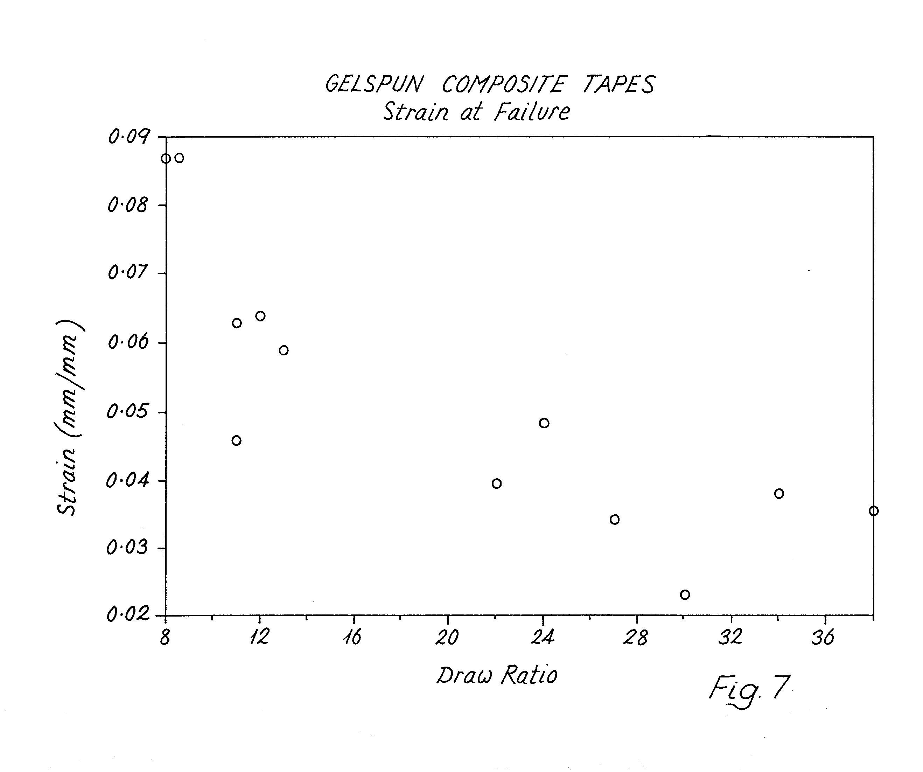

Figures 5, 6 and 7 represent the variation of mechanical properties with draw ratio of a film prepared by method (a) of this invention.

The following Examples illustrate the invention.

## EXAMPLE 1

1 g of ultrahigh molecular weight polyethylene (Hifax ex Hercules) in powder form was poured into 300 ml of decalin (decahydronaphthalene ex BDH Ltd.) (0.3% wt/vol; 0.303 wt%) which had been brought to at least 90°C in a beaker immersed in a stirred oil bath, as shown in Figure 10, thermostatted between 120° and 140°C. The mixture was then stirred with a thin (1.5 mm diameter) glass rod to disperse the powder homogeneously in the solvent and was next left to stand until all turbidity had disappeared. Stirring was recommenced and the stirring rod was periodically removed from the surface of the solution and/or gel so formed. (The solution and/or gel was ready to be withdrawn when the solution and/or gel removed with the stirring rod showed no trace of undissolved polyethylene.)

When the solution and/or gel was ready, the stirring rod was slowly removed, substantially vertically, from the surface and the solution and/or gel was slowly withdrawn therewith; passed over a Teflon pulley ("TEFLON" is a registered Trade Mark); and carefully wrapped once around a Teflon-coated drivable take-up spool. The angular velocity of the take-up spool was gradually decreased from rest to a haul-off rate of 0.5 metres min−1. The haul-off rate was thereafter increased to 16 metres min−1 without breakage (the rate was limited by the maximum speed of the spool). The withdrawing proceeded smoothly until the beaker was exhausted of solution and/or gel.

EXAMPLES 2 TO 4

The above Example was successfully repeated with solutions and/or gels of different concentrations, namely:

|         |            |           |              |
|---------|------------|-----------|--------------|
| Example 2 | 0.4% (wt/vol) | | (0.405 wt%) |
| Example 3 | 0.5%   "   | | (0.506 wt%) |
| Example 4 | 1.0%   "   | | (1.01  wt%). |

In each case, the withdrawing proceeded smoothly until the beaker was exhausted of solution and/or gel.

EXAMPLE 5

In this Example, a tape was successfully withdrawn directly from the solution and/or gel of Example 3.

## Claims

1. A process for the preparation of an elongate polymer material, which process comprises withdrawing at least one continuous stream of a solution and/or gel of the polymer material from a reservoir thereof without the polymer material passing, as a solution and/or gel, through an extrusion die; and collecting the elongate polymer material so prepared.

2. A process according to Claim 1 wherein the polymer material comprises a polyolefin.

3. A process according to Claim 2 wherein the polyolefin comprises polyethylene, polypropylene, a polyethylene-polypropylene copolymer or a blend comprising at least one polyolefin therefrom.

4. A process according to Claim 3 wherein the polyethylene comprises linear polyethylene.

5. A process according to any preceding claim wherein the polymer material has a weight average molecular weight greater than 500,000.

6. A process according to Claim 5 wherein the polymer material has a weight average molecular weight greater than 750,000.

7. A process according to any of Claims 4 to 6 wherein the polyethylene comprises linear polyethylene having a weight average molecular weight greater than 1,000,000.

8. A process according to any preceding claim wherein the solvent boils, at standard pressure above 140°C.

9. A process according to any preceding claim wherein the solvent for the polymer material comprises an aliphatic, cycloaliphatic or aromatic hydrocarbon.

10. A process according to Claim 9 wherein the solvent comprises a hydrogenated polycyclic aromatic hydrocarbon.

11. A process according to any preceding claim wherein the solution and/or gel of the polymer material is withdrawn at a temperature greater than 75°C.

12. A process according to Claim 11 wherein the solution and/or gel is withdrawn at a temperature greater than 110°C.

13. A process according to any preceding claim wherein the concentration of the polymer material in the solution and/or gel is at least 0.1%.

14. A process according to any preceding claim wherein a plurality of continuous streams of a solution and/or gel of the polymeric material is withdrawn from at least one reservoir thereof.

15. A process according to Claim 14 wherein the streams are permitted to coalesce laterally to form a tape.

16. A process according to any preceding claim wherein the or each continuous stream of a solution and/or gel of the polymeric material is withdrawn in gel form at a speed from 0.5 to 50 metres per minute.

17. A process according to any preceding claim wherein the or each stream of polymeric material is dried to provide a fibre, sheet or tape.

18. A process according to any preceding claim wherein the or each dried, partially dried or undried stream of polymeric material is drawn in the machine direction.

19. A process according to Claim 18 wherein the drawing is effected at a temperature from 75° to 135°C.

20. A process according to Claim 18 or 19 wherein the draw ratio is greater than 10X.

21. A process according to Claim 20 wherein the draw ratio is greater than 30X.

Take-up spool

0238342

Gel fibre

Hot gel    Parison

Silicone oil

Fig. 1

Hot plate

Drying oven

Pinch rollers

Hot gel

Recovered
solvent

Hot drawing rig

take-up spool

Fig. 2

*Reciprocating yarn guide*

*Take-up spool*

*Hot Gel*

*Fig. 3*

*Take-up spool*

*Gel tape*

*Parison*

*Hot gel*

*Contra rotatable rollers*

*Silicone oil*

*Hot plate*

*Fig. 4*

GELSPUN COMPOSITE TAPES
Stiffness Versus Draw Ratio

Fig. 5

0238342

GELSPUN COMPOSITE TAPES
Strength Versus Draw Ratio

Fig. 6

GELSPUN COMPOSITE TAPES
Strain at Failure

Fig. 7